# EUROPEAN PATENT SPECIFICATION

(11) **EP 3 490 194 B1**
(45) Date of publication and mention of the grant of the patent: **28.10.2020**
(21) Application number: 17830345.9
(22) Date of filing: 30.06.2017
(51) Int. Cl.: H04N 7/18, H04N 21/231, H04N 21/6587, H04N 21/8547

(54) **METHOD AND DEVICE FOR PLAYING VIDEO**
VERFAHREN UND VORRICHTUNG ZUR WIEDERGABE VON VIDEOS
PROCÉDÉ ET DISPOSITIF DE LECTURE DE VIDÉO

(30) Priority: 19.07.2016 CN 201610578390
(43) Date of publication of application: 29.05.2019
(73) Proprietor: Hangzhou Hikvision Digital Technology Co., Ltd., Zhejiang 310051 (CN)
(72) Inventor: WEI, Lanxin, Hangzhou Zhejiang 310051 (CN); LI, Kui, Hangzhou Zhejiang 310051 (CN); PAN, Yadong, Hangzhou Zhejiang 310051 (CN); SI, Lujie, Hangzhou Zhejiang 310051 (CN); FENG, Xiaochen, Hangzhou Zhejiang 310051 (CN)
(74) Representative: Liebetanz, Michael
(86) International application number: PCT/CN2017/091005
(87) International publication number: WO 2018/014711

(56) References cited:
- CN-A- 101 198 037
- CN-A- 101 232 407
- CN-A- 101 644 996
- CN-A- 103 929 609
- CN-A- 104 750 859
- JP-B2- 4 270 623
- US-A1- 2009 037 965
- US-A1- 2011 123 169
- US-A1- 2016 012 856

## Description

The present application claims the priority to a Chinese patent application No. CN201610578390 filed with China National Intellectual Property Administration on July 19, 2016 and entitled "METHOD AND DEVICE FOR PLAYING VIDEO".

### TECHNICAL FIELD

The present application relates to the field of video monitoring technology, and in particular to a method and device for playing a video.

### BACKGROUND

A video monitoring system generally includes a video recorder having a buffer area and a target storage area. While storing the recorded video data in real time during the recording, the video recorder buffers video index information (that can be used for retrieving and playing the video) into the buffer area in real time. For the operating efficiency of the video recorder, the video index information in the buffer area is transferred and stored at intervals to the target storage area so as to update index information packet stored thereon. In this way, when a user wants to play a video file corresponding to a certain period or to play a video starting at a certain time, the video monitoring system searches for the index information corresponding to the certain period or the certain time from the index information packet in the target storage area. The video monitoring system then gets the corresponding video file according to the index information, and successfully plays the video file.

However, there may be some problems when playing video files in such a way. Specifically, for example, the user wants to play a video file corresponding to a period or a time that is close to the current time. The video index information buffered in the buffer area which corresponds to the period or the time, however, may have not been transferred and stored to the target storage area yet. Thus, the video monitoring system cannot find the video index information corresponding to the period or the time from the index information packet. The video monitoring system will not successfully play the video file that the user expected, or it may play a video file that is not what the user wanted. This will result in a very poor user experience. Therefore, how to ensure that the video monitoring system can play the corresponding video file according to a video playing request of the user has become an urgent problem to be solved.

In the prior art, there are known some methods or devices as described in their respective documents.

The patent application US2011123169A1 discloses a video data recoding method suitable for recording computer sessions. Each video image frame is divided into multiple blocks. A server processes the video frames and transmits only changed blocks for each frame to a video log server. The video log server stores the changed blocks with block indices in a data file. The video log server also maintains a virtual frame table which stores, for each block of the frame, the data location within the data file where the most recent occurrence of that block is stored. The virtual frame table is continuously updated as changed blocks are stored in the data file. The video log server further stores a snapshot file containing snapshots of the virtual frame table at predetermined time points, along with time stamps and a next changed frame location. The data file and the snapshot file are used to reproduce the video images.

### SUMMARY

The objective of embodiments of the present application is to propose a method, device and computer program as defined by the appended independent claims 1, 6 and 11 for playing a video, such that the video monitoring system can play the corresponding video file according to the video playing request of the user, and provide the user with a better user experience.

Additional embodiments of the present application are provided by the appended dependent claims.

In the embodiments of the present application, the video monitoring system performs the very critical operation in advance, i.e., transferring and storing the video index information buffered in the buffer area to the target storage area. In this way, the video index information corresponding to all recording moments is stored in the updated index information packet in the target storage area. Accordingly, based on the updated index information packet, the video monitoring system can easily find and play the video file corresponding to the target time identification information. The timeliness and accuracy of playing the video can therefore be better guaranteed. Compared with the related art, in the embodiment of the application, the video monitoring system allows playing the corresponding video file according to the user's video playing request, so as to meet the user's needs and thus provide a better user experience.

### BRIEF DESCRIPTION OF THE DRAWINGS

To describe the solutions of embodiments of the present application and the related technology more clearly, the drawings to be used in the description of embodiments and the related technology will be described briefly below. Obviously, the drawings described below are merely drawings of some embodiments of the present application. Those skilled in the art can obtain other drawings based on these drawings without creative efforts.
FIG. 1 is a schematic flow chart illustrating a method for playing a video according to an embodiment of the present application;
FIG. 2 is a schematic diagram illustrating the operating principle of a video recorder;
FIG. 3 is a schematic diagram illustrating the structure of a device for playing a video according to an embodiment of the present application;
FIG. 4 is a schematic structure diagram of an electronic device according to an embodiment of the present application.

### DETAILED DESCRIPTION

The technical solution of the application will be described in detail with reference to the drawings of embodiments of the present application. Obviously, the embodiments described are only some instead of all embodiments of the present application. All other embodiments obtained based on the embodiments herein by those of ordinary skills in the art without any creative efforts fall into the scope of protection defined by the present application.

To solve the problems in the related art, the embodiments of the present application provide a method and device for playing a video.

The method for playing a video provided by an embodiment of the present application will be described first.

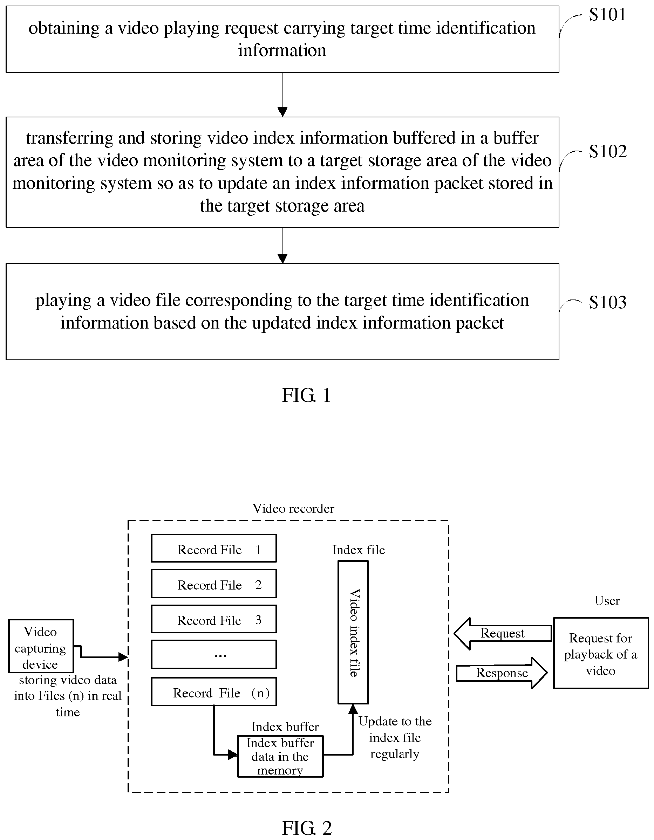

The flow chart shown in FIG. 1 illustrates a method for playing a video according to the embodiment of the present application. The method shown in FIG. 1 is applicable in a video monitoring system and includes the following operations.

S101, obtaining a video playing request carrying target time identification information.

The target time identification information may include a target period, wherein the user wants to play a video file corresponding to the target period. Alternatively, the target time identification information may include a target time, wherein the user wants to play a video file starting from the target time.

In the present embodiment, in addition to the target time identification information, the video playing request may carry a playing order type. Specifically, the playing order type may include a type of playing in normal order and a type of playing in reverse order. It can be understood that, with the type of playing in normal order, a video file in the video monitoring system is played in chronological order (i.e., playing in an order based on the recording timeof the video) according to a given time identification information, e.g, a given period. Conversely, with the type of playing in reverse order, a video file in the video monitoring system is played in reversed order (i.e., playing in a reversed order based on the recording time of the video) according to a given time identification information, e.g, a given period.

It should be noted that the video playing request may not carry a playing order type, and the video monitoring system may play a video in a default order.

Those skilled in the art will understand that, after the video monitoring system obtains a video playing request carrying target time identification information, if video index information corresponding to the target time identification information has not been timely transferred and stored to the target storage area, the video monitoring system will not be able to find the video index information corresponding to the target time identification information according to the index information packet currently stored in the target storage area. The video file corresponding to the target time identification information thus cannot be played successfully. To avoid an unsuccessful playing of a video file, the video monitoring system may perform the operation S102 before playing the video file.

S102, transferring and storing video index information buffered in a buffer area of the video monitoring system to a target storage area of the video monitoring system so as to update an index information packet stored in the target storage area.

In the present embodiment, the video monitoring system transfers and stores the video index information buffered in the buffer area to the target storage area, such that the updated index information packet stores the video index information corresponding to all recording moments. As such, based on the updated index information packet, the video monitoring system can easily obtain and play the video file corresponding to the target time identification information.

S103, playing a video file corresponding to the target time identification information based on the updated index information packet.

A specific example of the implementation of this embodiment is described below.

As shown in FIG. 2, while recording a video, the video monitoring system may store the captured video data to hard disk files, Record Files (n), in a chronological order. Specifically, a Record File (1) may store a video file from 8:00 to 8:30; a Record File (2) may store a video file from 8:30 to 9:00; a Record File (3) may store a video file from 9:00 to 9:30; a Record File (4) may store a video file from 9:30 to 10:00; and so on.

In addition, while storing a video file in real time, the video monitoring system may also records a file size offset for each frame of the video data in a corresponding hard disk file, and obtains timestamp information corresponding to each file size offset by parsing the bit stream of the current video frame. It can be easily seen that, the above information together constitutes the video index information for indexing a video file corresponding to any of the time identification information. The video index information is buffered in real time in a buffer area, e.g., index buffer. The index buffer data in the memory shown in FIG. 2 is the video index information. The video index information buffered in the Index buffer will be transferred and stored at intervals, for example every 2 minutes, to the target storage area, e.g., index file, namely to the video index file in FIG. 2.

For example, the current time is 12:10:00, the time of the latest transferring and storing is 12:09:55, and the target time identification information is a period from 12:09:55 to 12:10:00.

In the related art, if the video monitoring system fails to find video index information corresponding to the period from 12:09:55 to 12:10:00, in the case that the playing order type is the type of playing in reverse order, the video monitoring system may play a video file in reverse order from 12:09:55; and in the case that the playing order type is the type of playing in normal order, the video monitoring system would not be able to play a video file from 12:09:55 to 12:10:00. It can be seen that, in the related art, the video monitoring system is either completely unable to play the video file, or plays a video file that is not what the user wants. The timeliness and accuracy of playing a video cannot be guaranteed.

By comparison, in the present embodiment, since the video monitoring system performs a very critical operation, i.e., S102, before playing the video, the video index information of all recording moments is stored in the updated index information packet. The video monitoring system may determine, according to the updated index information packet in the Index file, a Record File(X) corresponding to the time of 12:09:55 and the file size offset of a video file corresponding to the time of 12:09:55 in the Record File (X), e.g., 21MB. Similarly, the video monitoring system may also determine, according to the updated index information packet in the Index file, a Record File(Y) corresponding to the time of 12:10:00 and the file size offset of a video file corresponding to the time of 12:10:00 in the Record File (Y), e.g., 38MB. It can be understood, all video files between the two video files corresponding to these two file size offsets are video files that the user wants to watch. At this point, the video monitoring system is able to successfully play the video file that the user wants to watch.

Similarly, for example, the current time is 10:00:00, the time of the latest transferring and storing is 9:55:55, and the target time identification information is 9:55:55-10:12:00.

In the related art, if the video monitoring system fails to find video index information corresponding to the period from 9:55:55 to 10:00:00, in the case that the playing order type is the type of playing in reverse order, the video monitoring system may play a video file in reverse order from 9:55:55; and in the case that the playing order type is the type of playing in normal order, the video monitoring system will not be able to play a video file from 9:55:55 to 10:00:00. It can be seen that in the related art, the video monitoring system is either completely unable to play the video file, or plays a video file that is not what the user wants. The timeliness and accuracy of playing a video cannot be guaranteed.

By comparison, in the present embodiment, since the video monitoring system performs a very critical operation, i.e., S102, before the play of the video, the video index information of all recording moments is stored in the updated index information packet. The video monitoring system can easily obtain, from the Index file, the video index information corresponding to the time range from 9:55:55 to 10:00:00. At this point, the video monitoring system is able to successfully play the video files that the user wants.

It can be seen that, in the embodiment, the video monitoring system performs the very critical operation in advance, i.e., transferring and storing the video index information buffered in the buffer area to the target storage area. In this way, the video index information corresponding to all recording moments is stored in the updated index information packet in the target storage area. Accordingly, based on the updated index information packet, the video monitoring system can easily find and play the video file corresponding to the target time identification information. The timeliness and accuracy of playing the video can therefore be better guaranteed. Compared with the related art, in the present embodiment, the video monitoring system allows playing the corresponding video file according to the user's video playing request, so as to meet the user's needs and thus provide a better user experience.

Optionally, the target time identification information may include a target period. Accordingly, transferring and storing the video index information buffered in the buffer area of the video monitoring system to the target storage area of the video monitoring system may include:
in the case that one of two time endpoints of the target period, which is closer to the current time, is later than a time at which the video index information was last transferred and stored to the target storage area, transferring and storing the video index information buffered in the buffer area of the video monitoring system to the target storage area of the video monitoring system.

In the embodiment, after the video playing request carrying the target time identification information is obtained, in the case that the target time identification information is a target period, the video monitoring system may first determine whether one of the two time endpoints of the target period, which is closer to the current time, is later than the time at which the video index information was last transferred and stored to the target storage area, so as to determine whether to perform the operation of transferring and storing the video index information. It can be understood, if the time endpoint of the two time endpoints of the target period, which is closer to the current time, is later than the time at which the video index information was last transferred and stored to the target storage area, the video index information buffered in the buffer area has not been timely transferred and stored to the target storage area, and there is no video index information corresponding to the target period in the index information packet currently stored in the target storage area; or, not all the video index information corresponding to the target period is stored in the index information packet currently stored in the target storage area. Thus, for a successful playing of the video file corresponding to the target period, the video monitoring system may transfer and store the video index information buffered in the buffer area to the target storage area.

It can be seen, in the embodiment, the video monitoring system also allows playing the corresponding video file according to the user's video playing request, so as to meet the user's needs and thus provide a better user experience.

Optionally, the target time identification information may include a target period. Accordingly, after obtaining a video playing request carrying target time identification information, the method may further include:
in the case that one of two time endpoints of the target period, which is closer to the current time, is not later than a time at which the video index information was last transferred and stored to the target storage area, playing a video file corresponding to the target period based on the index information packet currently stored in the target storage area of the video monitoring system.

In the embodiment, after the video playing request carrying the target time identification information is obtained, in the case that the target time identification information is a target period, the video monitoring system may first determine whether one of the two time endpoints of the target period, which is closer to the current time, is later than the time at which the video index information was last transferred and stored to the target storage area, so as to determine whether to perform the operation of transferring and storing the video index information. It can be understood, if the time endpoint of the two time endpoints of the target period, which is closer to the current time, is not later than the time at which the video index information was last transferred and stored to the target storage area, the video index information buffered in the buffer area has been timely transferred and stored to the target storage area, and the index information packet currently stored in the target storage area stores all the video index information corresponding to the target period. Thus, the video monitoring system can successfully play the video file corresponding to the target period based on the index information packet currently stored in the target storage area, without an operation of transferring and storing the video index information. The video corresponding to the target period can thus be presented to the user quickly, providing the user with a better user experience.

Optionally, the target time identification information may include a target period. Accordingly, playing a video file corresponding to the target time identification information based on the updated index information packet may include:
in the case that one of two time endpoints of the target period, which is closer to the current time, is not later than the time at which the video index information was last transferred and stored to the target storage area, playing the video file corresponding to the target time identification information based on the updated index information packet.

In the embodiment, after obtaining the video playing request carrying the target time identification information, the video index information buffered in the buffer area of the video monitoring system is transferred and stored to the target storage area of the video monitoring system to update an index information packet stored in the target storage area. Then, in the case that the target time identification information is the target period, the video monitoring system may determine whether the time endpoint of the two time endpoints of the target period, which is closer to the current time, is later than the time at which the video index information was last transferred and stored to the target storage area. If the time endpoint closer to the current time is not later than the time at which the video index information was last transferred and stored to the target storage area, the video file corresponding to the target time identification information is played based on the updated index information packet.

It can be understood, if the time endpoint of the two time endpoints of the target period, which is closer to the current time, is not later than the time at which the video index information was last transferred and stored to the target storage area, the index information packet currently stored in the target storage area has stored thereon all the video index information corresponding to the target period before the video index information buffered in the buffer area of the video monitoring system is transferred and stored to the target storage area of the video monitoring system. However, it is necessary for the video monitoring system to perform the operation of transferring and storing the video index information, such that a video file can be successfully played for a new video playing request, if any. In this way, the video file corresponding to the target period can be successfully played, and a preparation is made at the same time for the subsequent new video playing request, providing the user with a better user experience.

Optionally, the target time identification information includes a target time. Accordingly, transferring and storing the video index information buffered in the buffer area of the video monitoring system to the target storage area of the video monitoring system may include:
in the case that the target time is later than a time at which the video index information was last transferred and stored to the target storage area, transferring and storing the video index information buffered in the buffer area of the video monitoring system to the target storage area of the video monitoring system.

In the embodiment, after the video playing request carrying the target time identification information is obtained, in the case that the target time identification information is a target time, the video monitoring system may first determine whether the target time is later than the time at which the video index information was last transferred and stored to the target storage area, to determine whether to perform the operation of transferring and storing the video index information. It can be understood, if the target time is later than the time at which the video index information was last transferred and stored to the target storage area, there is no video index information corresponding to the target time in the index information packet currently stored in the target storage area of the video monitoring system. Accordingly, the video monitoring system cannot determine and play a video file starting from the target time. Thus, for a successful play of the video file corresponding to the target time, the video monitoring system may first transfer and store the video index information buffered in the buffer area to the target storage area. This way, the video monitoring system will be able to successfully play the video file starting from the target time.

It can be seen, in the present embodiment, the video monitoring system also allows playing the corresponding video file according to the user's video playing request, so as to meet the user's needs and thus provide a better user experience.

Optionally, the target time identification information includes a target time. Accordingly, before transferring and storing the video index information buffered in the buffer area of the video monitoring system to the target storage area of the video monitoring system, the method may further include:
in the case that the target time is not later than the time at which the video index information was last transferred and stored to the target storage area, playing the video file starting from the target time based on the index information packet currently stored in the target storage area of the video monitoring system; and
transferring and storing video index information buffered in a buffer area of the video monitoring system to a target storage area of the video monitoring system includes:
   when it is detected that there is no available video index information in the target storage area, transferring and storing the video index information buffered in the buffer area of the video monitoring system to the target storage area of the video monitoring system.

In the embodiment, after the video playing request carrying the target time identification information is obtained, in the case that the target time identification information is a target time, the video monitoring system may first determine whether the target time is later than the time at which the video index information was last transferred and stored to the target storage area, so as to determine whether to perform the operation of transferring and storing the video index information. It can be understood, in the case that the target time is not later than the time at which the video index information was last transferred and stored to the target storage area, the subsequent processes may vary depending on the playing order type, which is illustrated by way of example below.

For example, the target time is 8:10:23, and the time at which the video index information was last transferred and stored to the target storage area is 8:12:00. In this case, when the video monitoring system is requested to play the video file reversely, as the index information packet stored in the target storage area stores video index information corresponding to the recording moments before and at 8:10:23, the video monitoring system can play the video file starting from 8:10:23 till its end, or, stop playing the video file upon receiving a command from the user to stop playing the video.

When it is requested to play the video file in the normal order, the video monitoring system may play the video file starting from 8:10:23. If the video file is played to 8:12:00 and the current time has reached the next time for transferring and storing the video index information to the target storage area, the video file can obviously be played continuously. If the video file is played to 8:12:00 and the current time has not reached the next time for transferring and storing the video index information to the target storage area, there will be no video index information available in the index information packet at that time. Once such a case is detected, the video monitoring system transfers and stores the video index information buffered in the buffer area to the target storage area of the video monitoring system to provide a continuous play of the video file.

It can be seen, in the embodiment, the video monitoring system also allows playing the corresponding video file according to the user's video playing request, so as to meet the user's needs and thus provide a better user experience.

In conclusion, in the embodiment, the video monitoring system allows to play the corresponding video file according to the user's video playing request, so as to meet the user's needs and thus provide a better user experience.

Corresponding to the method embodiments above, an embodiment of the present application also provides a device for playing a video. The device for playing a video provided by the present application will be described below.

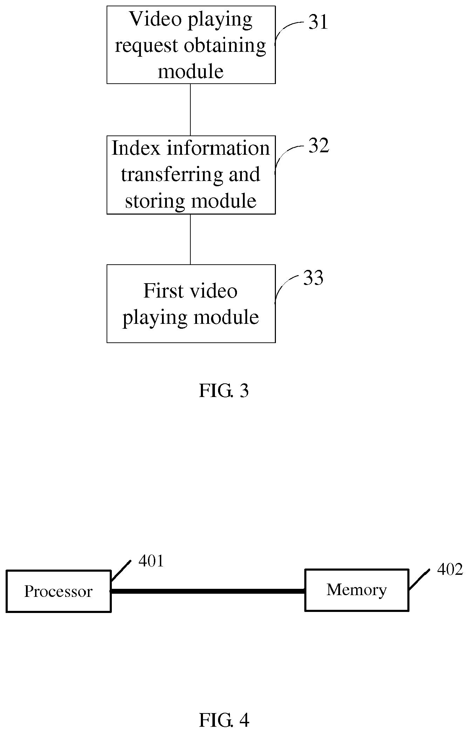

The block representation shown in FIG. 3 illustrates the structure of the device for playing a video according to the embodiment of the present application. The device as shown in FIG. 3 is applicable in a video monitoring system and includes:
a video playing request obtaining module 31, configured to obtain a video playing request carrying target time identification information;
an index information transferring and storing module 32, configured to transfer and store video index information buffered in a buffer area of the video monitoring system to a target storage area of the video monitoring system so as to update an index information packet stored in the target storage area; and
a first video playing module 33, configured to play a video file corresponding to the target time identification information based on the updated index information packet.

In the embodiment, the video monitoring system performs the very critical operation in advance, i.e., transferring and storing the video index information buffered in the buffer area to the target storage area. In this way, the video index information corresponding to all recording moments is stored in the updated index information packet in the target storage area. Accordingly, based on the updated index information packet, the video monitoring system can easily find and play the video file corresponding to the target time identification information. The timeliness and accuracy of playing the video can therefore be better guaranteed. Compared with the related art, in the embodiment, the video monitoring system allows playing the corresponding video file according to the user's video playing request, so as to meet the user's needs and thus provide a better user experience.

Optionally, the target time identification information includes a target period. Accordingly, the index information transferring and storing module 32 is specifically configured to:
in the case that one of two time endpoints of the target period, which is closer to the current time, is later than a time at which the video index information was last transferred and stored to the target storage area, transfer and store the video index information buffered in the buffer area of the video monitoring system to the target storage area of the video monitoring system.

Optionally, the target time identification information includes a target period. Accordingly, the device further includes:
a second video playing module, configured to, after obtaining a video playing request carrying target time identification information, in the case that one of two time endpoints of the target period, which is closer to the current time, is not later than a time at which the video index information was last transferred and stored to the target storage area, play a video file corresponding to the target period based on the index information packet currently stored in the target storage area of the video monitoring system.

Optionally, the target time identification information includes a target time, and the index information transferring and storing module 32 is specifically configured to:
in the case that the target time is later than a time at which the video index information was last transferred and stored to the target storage area, transfer and store the video index information buffered in the buffer area of the video monitoring system to the target storage area of the video monitoring system.

Optionally, the target time identification information includes a target time, and the device further includes: a third video playing module; and
the third video playing module is configured to, before transferring and storing video index information buffered in a buffer area of the video monitoring system to a target storage area of the video monitoring system, in the case that the target time is not later than a time at which the video index information was last transferred and stored to the target storage area, play the video file starting from the target time based on the index information packet currently stored in the target storage area of the video monitoring system; and
the index information transferring and storing module 32 is specifically configured to, when it is detected that there is no available video index information in the target storage area, transfer and store the video index information buffered in the buffer area of the video monitoring system to the target storage area of the video monitoring system.

In conclusion, in the embodiment, the video monitoring system allows to play the corresponding video file according to the user's video playing request, so as to meet the user's needs and thus provide a better user experience.

An embodiment of the present application further provides an electronic device, as shown in FIG. 4. The electronic device includes a processor 401 and a memory 402. The memory 402 is provided for storing a computer program. The processor 401 is provided for executing the program stored on the memory 402 to carry out a method for playing a video, which includes:
obtaining a video playing request carrying target time identification information;
transferring and storing video index information buffered in a buffer area of the video monitoring system to a target storage area of the video monitoring system so as to update an index information packet stored in the target storage area; and
playing a video file corresponding to the target time identification information based on the updated index information packet.

In an implementation of the present application, the target time identification information includes a target period. Accordingly, transferring and storing the video index information buffered in the buffer area of the video monitoring system to the target storage area of the video monitoring system includes:
in the case that one of two time endpoints of the target period, which is closer to the current time, is later than a time at which the video index information was last transferred and stored to the target storage area, transferring and storing the video index information buffered in the buffer area of the video monitoring system to the target storage area of the video monitoring system.

In an implementation of the present application, the target time identification information includes a target period. Accordingly, after obtaining a video playing request carrying target time identification information, the method further includes:
in the case that one of two time endpoints of the target period, which is closer to the current time, is not later than a time at which the video index information was last transferred and stored to the target storage area, playing a video file corresponding to the target period based on the index information packet currently stored in the target storage area of the video monitoring system.

In an implementation of the present application, the target time identification information includes a target time. Accordingly, transferring and storing the video index information buffered in the buffer area of the video monitoring system to the target storage area of the video monitoring system includes:
in the case that the target time is later than a time at which the video index information was last transferred and stored to the target storage area, transferring and storing the video index information buffered in the buffer area of the video monitoring system to the target storage area of the video monitoring system.

In an implementation of the present application, the target time identification information includes a target time. Accordingly, before transferring and storing the video index information buffered in the buffer area of the video monitoring system to the target storage area of the video monitoring system, the method further includes:
in the case that the target time is not later than a time at which the video index information was last transferred and stored to the target storage area, playing the video file starting from the target time based on the index information packet currently stored in the target storage area of the video monitoring system; and
transferring and storing video index information buffered in a buffer area of the video monitoring system to a target storage area of the video monitoring system, includes:
   when it is detected that there is no available video index information in the target storage area, transferring and storing the video index information buffered in the buffer area of the video monitoring system to the target storage area of the video monitoring system.

In the embodiment, the video monitoring system performs the very critical operation in advance, i.e., transferring and storing the video index information buffered in the buffer area to the target storage area. In this way, the video index information corresponding to all recording moments is stored in the updated index information packet in the target storage area. Accordingly, based on the updated index information packet, the video monitoring system can easily find and play the video file corresponding to the target time identification information. The timeliness and accuracy of playing the video can therefore be better guaranteed. Compared with the related art, in the embodiment, the video monitoring system allows playing the corresponding video file according to the user's video playing request, so as to meet the user's needs and thus provide a better user experience.

An embodiment of the present application provides a computer readable storage medium with a computer program stored thereon. The computer program may be executed by a processor, so as to perform a method described above, including:
obtaining a video playing request carrying target time identification information;
transferring and storing video index information buffered in a buffer area of the video monitoring system to a target storage area of the video monitoring system so as to update an index information packet stored in the target storage area; and
playing a video file corresponding to the target time identification information based on the updated index information packet.

In an implementation of the present application, the target time identification information includes a target period. Accordingly, transferring and storing the video index information buffered in the buffer area of the video monitoring system to the target storage area of the video monitoring system includes:
in the case that one of two time endpoints of the target period, which is closer to the current time, is later than a time at which the video index information was last transferred and stored to the target storage area, transferring and storing the video index information buffered in the buffer area of the video monitoring system to the target storage area of the video monitoring system.

In an implementation of the present application, the target time identification information includes a target period. Accordingly, after obtaining a video playing request carrying target time identification information, the method further includes:
in the case that one of two time endpoints of the target period, which is closer to the current time, is not later than a time at which the video index information was last transferred and stored to the target storage area, playing a video file corresponding to the target period based on the index information packet currently stored in the target storage area of the video monitoring system.

In an implementation of the present application, the target time identification information includes a target time. Accordingly, transferring and storing the video index information buffered in the buffer area of the video monitoring system to the target storage area of the video monitoring system, includes:
in the case that the target time is later than a time at which the video index information was last transferred and stored to the target storage area, transferring and storing the video index information buffered in the buffer area of the video monitoring system to the target storage area of the video monitoring system.

In an implementation of the present application, the target time identification information includes a target time. Accordingly, before transferring and storing the video index information buffered in the buffer area of the video monitoring system to the target storage area of the video monitoring system, the method further includes:
in the case that the target time is not later than a time at which the video index information was last transferred and stored to the target storage area, playing the video file starting from the target time based on the index information packet currently stored in the target storage area of the video monitoring system; and
transferring and storing video index information buffered in a buffer area of the video monitoring system to a target storage area of the video monitoring system, includes:
   when it is detected that there is no available video index information in the target storage area, transferring and storing the video index information buffered in the buffer area of the video monitoring system to the target storage area of the video monitoring system.

In the embodiment, the video monitoring system performs the very critical operation in advance, i.e., transferring and storing the video index information buffered in the buffer area to the target storage area. In this way, the video index information corresponding to all recording moments is stored in the updated index information packet in the target storage area. Accordingly, based on the updated index information packet, the video monitoring system can easily find and play the video file corresponding to the target time identification information. The timeliness and accuracy of playing the video can therefore be better guaranteed. Compared with the related art, in the embodiment, the video monitoring system allows playing the corresponding video file according to the user's video playing request, so as to meet the user's needs and thus provide a better user experience.

It should be noted that the relationship terms herein such as "first", "second", and the like are only used to distinguish one entity or operation from another entity or operation, but do not necessarily require or imply that there is any actual relationship or order between these entities or operations. Moreover, the terms "include", "comprise" or any other variants thereof are intended to cover non-exclusive inclusions, so that processes, methods, articles or devices comprising a series of elements include not only those elements listed but also those that are not specifically listed or the elements intrinsic to these processes, methods, articles, or devices. Without further limitations, elements defined by the wording "comprise(s) a/an ..." or "include(s) a/an ..." do not exclude additional identical elements in the processes, methods, articles, or devices that include the listed elements.

All the embodiments are described in corresponding ways, same or similar parts in each of the embodiments can be referred to one another, and the parts emphasized are differences from other embodiments. Particularly, the description of embodiments of the device for playing a video shown in FIG. 3, the electronic device shown in FIG. 4, and the computer readable storage medium is relatively simple, since these embodiments are substantially similar to the embodiment of the method for playing a video shown in FIG. 1. For related part, reference may be made to those in the description of the method for playing a video shown in FIG. 1.

## Claims

1. A method for playing a video, which is applicable in a video monitoring system, the method comprises:
in responding to obtaining a video playing request carrying target time identification information (S101), transferring and storing video index information buffered in a buffer area of the video monitoring system to a target storage area of the video monitoring system such that the video index information is included in an index information packet stored in a target storage area, so as to obtain an updated index information packet (S102), wherein the target time identification information comprises a target period for which a video file is to be played or a target time from which a video file is to be played, and the index information packet comprises video index information stored in the target storage area; and
playing a video file corresponding to the target time identification information based on the updated index information packet (S103).

2. The method of claim 1, wherein when the target time identification information comprises a target period, and transferring and storing video index information buffered in a buffer area of the video monitoring system to a target storage area of the video monitoring system comprises:
in a case that one of two time endpoints of the target period, which is closer to the current time, is later than a time at which the video index information was last transferred and stored to the target storage area, transferring and storing the video index information buffered in the buffer area of the video monitoring system to the target storage area of the video monitoring system.

3. The method of claim 1, wherein when the target time identification information comprises a target period, and in responding to obtaining a video playing request carrying target time identification information, the method further comprises:
in a case that one of two time endpoints of the target period, which is closer to the current time, is not later than a time at which the video index information was last transferred and stored to the target storage area, playing a video file corresponding to the target period based on the index information packet currently stored in the target storage area of the video monitoring system.

4. The method of claim 1, wherein when the target time identification information comprises a target time, and transferring and storing video index information buffered in a buffer area of the video monitoring system to a target storage area of the video monitoring system comprises:
in a case that the target time is later than a time at which the video index information was last transferred and stored to the target storage area, transferring and storing the video index information buffered in the buffer area of the video monitoring system to the target storage area of the video monitoring system.

5. The method of claim 1, wherein when the target time identification information comprises a target time, and before transferring and storing video index information buffered in a buffer area of the video monitoring system to a target storage area of the video monitoring system, the method further comprises:
in a case that the target time is not later than a time at which the video index information was last transferred and stored to the target storage area, playing the video file starting from the target time based on the index information packet currently stored in the target storage area of the video monitoring system; and
transferring and storing video index information buffered in a buffer area of the video monitoring system to a target storage area of the video monitoring system, comprises:
when it is detected that there is no available video index information in the target storage area, transferring and storing the video index information buffered in the buffer area of the video monitoring system to the target storage area of the video monitoring system.

6. An electronic device, comprising a processor and a memory, the memory is provided for storing a computer program, and the processor is provided for executing the program stored on the memory to carry out method for playing a video, **characterized in that**, the method comprises:
in responding to obtaining a video playing request carrying target time identification information (S101), transferring and storing video index information buffered in a buffer area of the video monitoring system to a target storage area of the video monitoring system such that the video index information is included in an index information packet stored in a target storage area, so as to obtain an updated index information packet (S 102), wherein the target time identification information comprises a target period for which a video file is to be played or a target time from which a video file is to be played, and the index information packet comprises video index information stored in the target storage area; and
playing a video file corresponding to the target time identification information based on the updated index information packet (S103).

7. The electronic device of claim 6, wherein when the target time identification information comprises a target period, and transferring and storing video index information buffered in a buffer area of the video monitoring system to a target storage area of the video monitoring system comprises:
in a case that one of two time endpoints of the target period, which is closer to the current time, is later than a time at which the video index information was last transferred and stored to the target storage area, transferring and storing the video index information buffered in the buffer area of the video monitoring system to the target storage area of the video monitoring system.

8. The electronic device of claim 6, wherein when the target time identification information comprises a target period, and in responding to obtaining a video playing request carrying target time identification information, the method further comprises:
in a case that one of two time endpoints of the target period, which is closer to the current time, is not later than a time at which the video index information was last transferred and stored to the target storage area, playing a video file corresponding to the target period based on the index information packet currently stored in the target storage area of the video monitoring system.

9. The electronic device of claim 6, wherein when the target time identification information comprises a target time, and transferring and storing video index information buffered in a buffer area of the video monitoring system to a target storage area of the video monitoring system comprises:
in a case that the target time is later than a time at which the video index information was last transferred and stored to the target storage area, transferring and storing the video index information buffered in the buffer area of the video monitoring system to the target storage area of the video monitoring system.

10. The electronic device of claim 6, wherein when the target time identification information comprises a target time, and before transferring and storing video index information buffered in a buffer area of the video monitoring system to a target storage area of the video monitoring system, the method further comprises:
in a case that the target time is not later than a time at which the video index information was last transferred and stored to the target storage area, playing the video file starting from the target time based on the index information packet currently stored in the target storage area of the video monitoring system; and
transferring and storing video index information buffered in a buffer area of the video monitoring system to a target storage area of the video monitoring system, comprises:
when it is detected that there is no available video index information in the target storage area, transferring and storing the video index information buffered in the buffer area of the video monitoring system to the target storage area of the video monitoring system.

11. A computer readable storage medium storing a computer program thereon, the computer program is executed by a processor to carry out the method of any of claims 1-5.

## Patentansprüche

1. Verfahren zur Wiedergabe eines Videos, das in einem Videoüberwachungssystem anwendbar ist, wobei das Verfahren umfasst:
beim Antworten auf das Erhalten einer Video-Wiedergabeanforderung, die Zielzeit-Identifikationsinformation (S101) trägt, Übertragen und Speichern von Videoindexinformation, die in einem Pufferbereich des Videoüberwachungssystems gepuffert ist, zu und in einem Zielspeicherbereich des Videoüberwachungssystems, so dass die Videoindexinformation in einem Indexinformationspaket enthalten ist, das in einem Zielspeicherbereich gespeichert ist, um ein aktualisiertes Indexinformationspaket (S102) zu erhalten, wobei die Zielzeit-Identifikationsinformation eine Zielperiode, für die eine Videodatei wiedergegeben werden soll, oder eine Zielzeit, ab der eine Videodatei wiedergegeben werden soll, umfasst, und das Indexinformationspaket Videoindexinformation umfasst, die in dem Zielspeicherbereich gespeichert ist; und
Wiedergabe einer Videodatei, die den Zielzeit-Identifikationsinformationen auf der Grundlage des aktualisierten Indexinformationspakets (S103) entspricht.

2. Verfahren nach Anspruch 1, wobei, wenn die Zielzeit-Identifikationsinformation eine Zielperiode umfasst, und das Übertragen und Speichern von Videoindexinformation, die in einem Pufferbereich des Videoüberwachungssystems gepuffert ist, zu einem Zielspeicherbereich des Videoüberwachungssystems umfasst:
in einem Fall, in dem einer von zwei Zeit-Endpunkten der Zielperiode, der näher an der aktuellen Zeit liegt, später ist als eine Zeit, zu der die Videoindexinformation zuletzt übertragen und in dem Zielspeicherbereich gespeichert worden ist, Übertragen und Speichern der in dem Pufferbereich des Videoüberwachungssystems gepufferten Videoindexinformation zu dem Zielspeicherbereich des Videoüberwachungssystems.

3. Verfahren nach Anspruch 1, wobei, wenn die Zielzeit-Identifikationsinformation eine Zielperiode umfasst, und bei der Reaktion auf den Erhalt einer Video-Wiedergabeanforderung, die Zielzeit-Identifikationsinformation trägt, das Verfahren ferner umfasst:
in einem Fall, dass einer von zwei Zeit-Endpunkten der Zielperiode, der näher an der aktuellen Zeit liegt, nicht später ist als eine Zeit, zu der die Video-Indexinformation zuletzt übertragen und in dem Zielspeicherbereich gespeichert worden ist, Wiedergabe einer Videodatei, die der Zielperiode entspricht, auf der Grundlage des Indexinformationspakets, das gegenwärtig im Zielspeicherbereich des Videoüberwachungssystems gespeichert ist.

4. Verfahren nach Anspruch 1, wobei, wenn die Zielzeit-Identifikationsinformation eine Zielzeit umfasst, und das Übertragen und Speichern von Videoindexinformation, die in einem Pufferbereich des Videoüberwachungssystems gepuffert ist, zu und in einem Zielspeicherbereich des Videoüberwachungssystems umfasst:
in einem Fall, in dem die Zielzeit später ist als eine Zeit, zu der die Videoindexinformation zuletzt zu dem Zielspeicherbereich übertragen und in diesem gespeichert worden ist, Übertragen und Speichern der in dem Pufferbereich des Videoüberwachungssystems gepufferten Videoindexinformation zu dem und in dem Zielspeicherbereich des Videoüberwachungssystems.

5. Verfahren nach Anspruch 1, wobei, wenn die Zielzeit-Identifikationsinformation eine Zielzeit umfasst, und vor dem Übertragen und Speichern der in einem Pufferbereich des Videoüberwachungssystems gepufferten Videoindexinformation zu einem und in einem Zielspeicherbereich des Videoüberwachungssystems, das Verfahren ferner umfasst:
in einem Fall, in dem die Zielzeit nicht später als eine Zeit ist, zu der die Videoindexinformation zuletzt zu dem Zielspeicherbereich übertragen und in diesem gespeichert worden ist, Wiedergabe der Videodatei beginnend von der Zielzeit auf der Grundlage des Indexinformationspakets, das gegenwärtig in dem Zielspeicherbereich des Videoüberwachungssystems gespeichert ist; und
das Übertragen und Speichern von Videoindexinformationen, die in einem Pufferbereich des Videoüberwachungssystems gepuffert sind, zu und in einem Zielspeicherbereich des Videoüberwachungssystems, umfasst:
wenn festgestellt wird, dass es keine verfügbaren Videoindexinformationen in dem Zielspeicherbereich gibt, Übertragen und Speichern der im Pufferbereich des Videoüberwachungssystems gepufferten Videoindexinformationen zu dem und in dem Zielspeicherbereich des Videoüberwachungssystems.

6. Elektronische Vorrichtung mit einem Prozessor und einem Speicher, wobei der Speicher zum Speichern eines Computerprogramms vorgesehen ist, und der Prozessor zum Ausführen des im Speicher gespeicherten Programms vorgesehen ist, um ein Verfahren zur Wiedergabe eines Videos auszuführen, **dadurch gekennzeichnet, dass** das Verfahren umfasst:
beim Antworten auf das Erhalten einer Video-Wiedergabeanforderung, welche eine Zielzeit-Identifikationsinformation (S101) trägt, Übertragen und Speichern von Videoindexinformation, die in einem Pufferbereich des Videoüberwachungssystems gepuffert ist, zu einem Zielspeicherbereich des Videoüberwachungssystems, so dass die Videoindexinformation in einem Indexinformationspaket enthalten ist, das in einem Zielspeicherbereich gespeichert ist, um so ein aktualisiertes Indexinformationspaket (S102) zu erhalten, wobei die Zielzeit-Identifikationsinformation eine Zielperiode, für die eine Videodatei wiedergegeben werden soll, oder eine Zielzeit, ab der eine Videodatei wiedergegeben werden soll, umfasst, und das Indexinformationspaket Videoindexinformation umfasst, die in dem Zielspeicherbereich gespeichert ist; und
Wiedergabe einer Videodatei, die den Zielzeit-Identifikationsinformationen auf der Grundlage des aktualisierten Indexinformationspakets (S103) entspricht.

7. Elektronische Vorrichtung nach Anspruch 6, wobei, wenn die Zielzeit-Identifikationsinformation eine Zielperiode umfasst, und das Übertragen und Speichern von Videoindexinformation, die in einem Pufferbereich des Videoüberwachungssystems gepuffert ist, zu einem Zielspeicherbereich des Videoüberwachungssystems umfasst:
in einem Fall, in dem einer von zwei Zeitendpunkten der Zielperiode, der näher an der aktuellen Zeit liegt, später ist als eine Zeit, zu der die Videoindexinformation zuletzt zu dem Zielspeicherbereich übertragen und in diesem gespeichert worden ist, Übertragen und Speichern der in dem Pufferbereich des Videoüberwachungssystems gepufferten Videoindexinformation zu dem und in dem Zielspeicherbereich des Videoüberwachungssystems.

8. Elektronische Vorrichtung nach Anspruch 6, wobei, wenn die Zielzeit-Identifikationsinformation eine Zielperiode umfasst, und bei der Reaktion auf den Erhalt einer Videowiedergabeanforderung, die Zielzeit-Identifikationsinformation trägt, das Verfahren ferner umfasst:
in einem Fall, dass einer von zwei Zeit-Endpunkten der Zielperiode, der näher an der aktuellen Zeit liegt, nicht später ist als eine Zeit, zu der die Video-Indexinformation zuletzt übertragen und in dem Ziel-Speicherbereich gespeichert worden ist, Wiedergabe einer der Zielperiode entsprechenden Videodatei auf der Grundlage des Indexinformationspakets, das gegenwärtig in dem Ziel-Speicherbereich des Videoüberwachungssystems gespeichert ist.

9. Elektronische Vorrichtung nach Anspruch 6, wobei, wenn die Zielzeit-Identifikationsinformation eine Zielzeit umfasst, und Übertragen und Speichern von Videoindexinformation, die in einem Pufferbereich des Videoüberwachungssystems gepuffert ist, zu und in einem Zielspeicherbereich des Videoüberwachungssystems umfasst:
in einem Fall, in dem die Zielzeit später ist als eine Zeit, zu der die Videoindexinformation zuletzt zu dem Zielspeicherbereich übertragen und gespeichert worden ist, Übertragen und Speichern der in dem Pufferbereich des Videoüberwachungssystems gepufferten Videoindexinformation zu dem Zielspeicherbereich des Videoüberwachungssystems.

10. Elektronische Vorrichtung nach Anspruch 6, wobei, wenn die Zielzeit-Identifikationsinformation eine Zielzeit umfasst, und vor dem Übertragen und Speichern von Videoindexinformation, die in einem Pufferbereich des Videoüberwachungssystems gepuffert ist, zu und in einem Zielspeicherbereich des Videoüberwachungssystems, das Verfahren ferner umfasst:
in einem Fall, in dem die Zielzeit nicht später als eine Zeit ist, zu der die Videoindexinformation zuletzt übertragen und in dem Zielspeicherbereich gespeichert worden ist, Wiedergabe der Videodatei beginnend von der Zielzeit auf der Grundlage des Indexinformationspakets, das gegenwärtig in dem Zielspeicherbereich des Videoüberwachungssystems gespeichert ist; und
das Übertragen und Speichern von Videoindexinformation, die in einem Pufferbereich des Videoüberwachungssystems gepuffert ist, zu und in einem Zielspeicherbereich des Videoüberwachungssystems, umfasst:
wenn festgestellt wird, dass es keine verfügbaren Videoindexinformationen im Zielspeicherbereich gibt, Übertragen und Speichern der im Pufferbereich des Videoüberwachungssystems gepufferten Videoindexinformationen in den Zielspeicherbereich des Videoüberwachungssystems.

11. Computerlesbares Speichermedium, auf dem ein Computerprogramm gespeichert ist, wobei das Computerprogramm von einem Prozessor ausgeführt wird, um das Verfahren nach einem der Ansprüche 1-5 auszuführen.

## Revendications

1. Procédé de lecture d'une vidéo, qui est applicable dans un système de surveillance vidéo, , le procédé comprenant :
en réponse à l'obtention d'une demande de lecture vidéo portant des informations d'identification de temps cible (S101), le transfert et le stockage d'informations d'index vidéo mises en mémoire tampon dans une zone tampon du système de surveillance vidéo vers une zone de stockage cible du système de surveillance vidéo de telle sorte que les informations d'index vidéo soient incluses dans un paquet d'informations d'index stocké dans une zone de stockage cible, de manière à obtenir un paquet d'informations d'index mis à jour (S102), dans lequel les informations d'identification de temps cible comprennent une période cible pour laquelle un fichier vidéo doit être lu ou un temps cible à partir duquel un fichier vidéo doit être lu, et le paquet d'informations d'index comprend des informations d'index vidéo stockées dans la zone de stockage cible ; et
lecture d'un fichier vidéo correspondant aux informations d'identification de temps cible sur la base du paquet d'informations d'index mis à jour (S103).

2. Procédé selon la revendication 1, dans lequel, lorsque les informations d'identification du temps cible comprennent une période cible, et le transfert et le stockage des informations d'index vidéo mises en mémoire tampon dans une zone de mémoire tampon du système de surveillance vidéo vers une zone de stockage cible du système de surveillance vidéo comprend :
dans le cas où l'un des deux temps de fin de la période cible, qui est plus proche du temps actuel, est postérieur au temps auquel les informations d'index vidéo ont été transférées et stockées pour la dernière fois dans la zone de stockage cible, le transfert et le stockage des informations d'index vidéo mises en mémoire tampon dans la zone tampon du système de vidéosurveillance vers la zone de stockage cible du système de vidéosurveillance.

3. Procédé selon la revendication 1, dans lequel, lorsque les informations d'identification du temps cible comprennent une période cible, et en réponse à l'obtention d'une demande de lecture vidéo portant des informations d'identification du temps cible, le procédé comprend en outre :
dans un cas où l'un des deux temps de fin de la période cible, qui est plus proche du temps actuel, n'est pas postérieur au temps auquel les informations d'index vidéo ont été transférées et stockées pour la dernière fois dans la zone de stockage cible, la lecture d'un fichier vidéo correspondant à la période cible sur la base du paquet d'informations d'index actuellement stocké dans la zone de stockage cible du système de vidéosurveillance.

4. Procédé selon la revendication 1, dans lequel lorsque les informations d'identification de la période cible comprennent une période cible, et le transfert et le stockage des informations d'index vidéo mises en mémoire tampon dans une zone de mémoire tampon du système de surveillance vidéo vers une zone de mémoire cible du système de surveillance vidéo comprend :
dans le cas où le temps cible est postérieur au temps auquel les informations d'index vidéo ont été transférées et stockées pour la dernière fois dans la zone de stockage cible, le transfert et le stockage des informations d'index vidéo mises en mémoire tampon dans la zone tampon du système de vidéosurveillance vers la zone de stockage cible du système de vidéosurveillance.

5. Procédé selon la revendication 1, dans lequel, lorsque les informations d'identification du temps cible comprennent un temps cible, et avant de transférer et de stocker les informations d'index vidéo mises en mémoire tampon dans une zone tampon du système de surveillance vidéo vers une zone de stockage cible du système de surveillance vidéo, le procédé comprend en outre :
dans un cas où le temps cible n'est pas ultérieur au temps auquel les informations d'index vidéo ont été transférées et stockées pour la dernière fois dans la zone de stockage cible, la lecture du fichier vidéo à partir de l'heure cible sur la base du paquet d'informations d'index actuellement stocké dans la zone de stockage cible du système de surveillance vidéo ; et
le transfert et le stockage d'informations d'index vidéo mises en mémoire tampon dans une zone tampon du système de surveillance vidéo vers une zone de stockage cible du système de surveillance vidéo, comprend :
lorsqu'il est détecté qu'aucune information d'index vidéo n'est disponible dans la zone de stockage cible, le transfert et le stockage des informations d'index vidéo mises en mémoire tampon dans la zone tampon du système de vidéosurveillance vers la zone de stockage cible du système de vidéosurveillance.

6. Dispositif électronique, comprenant un processeur et une mémoire, où la mémoire est prévue pour stocker un programme informatique, et le processeur est prévu pour exécuter le programme stocké sur la mémoire pour exécuter le procédé de lecture d'une vidéo, **caractérisé en ce que**, le procédé comprend :
en réponse à l'obtention d'une demande de lecture vidéo portant des informations d'identification de temps cible (S101), le transfert et le stockage d'informations d'index vidéo mises en mémoire tampon dans une zone tampon du système de surveillance vidéo vers une zone de stockage cible du système de surveillance vidéo de telle sorte que les informations d'index vidéo soient incluses dans un paquet d'informations d'index stocké dans une zone de stockage cible, de manière à obtenir un paquet d'informations d'index mis à jour (S102), dans lequel les informations d'identification de temps cible comprennent une période cible pour laquelle un fichier vidéo doit être lu ou un temps cible à partir duquel un fichier vidéo doit être lu, et le paquet d'informations d'index comprend des informations d'index vidéo stockées dans la zone de stockage cible ; et
lecture d'un fichier vidéo correspondant aux informations d'identification du temps cible sur la base du paquet d'informations d'index mis à jour (S103).

7. Dispositif électronique selon la revendication 6, dans lequel, lorsque les informations d'identification du temps cible comprennent une période cible, et le transfert et le stockage des informations d'index vidéo mises en mémoire tampon dans une zone tampon du système de surveillance vidéo vers une zone de stockage cible du système de surveillance vidéo comprend :
dans le cas où l'un des deux temps de fin de la période cible, qui est plus proche du temps actuel, est postérieur au temps auquel les informations d'index vidéo ont été transférées et stockées pour la dernière fois dans la zone de stockage cible, le transfert et le stockage des informations d'index vidéo mises en mémoire tampon dans la zone tampon du système de vidéosurveillance vers la zone de stockage cible du système de vidéosurveillance.

8. Dispositif électronique selon la revendication 6, dans lequel, lorsque les informations d'identification du temps cible comprennent une période cible, et en réponse à l'obtention d'une demande de lecture vidéo portant des informations d'identification du temps cible, le procédé comprend en outre :
dans un cas où l'un des deux temps de fin de la période cible, qui est plus proche du temps actuel, n'est pas postérieur au temps auquel les informations d'index vidéo ont été transférées et stockées pour la dernière fois dans la zone de stockage cible, la lecture d'un fichier vidéo correspondant à la période cible sur la base du paquet d'informations d'index actuellement stocké dans la zone de stockage cible du système de vidéosurveillance.

9. Dispositif électronique selon la revendication 6, dans lequel, lorsque les informations d'identification de la période cible comprennent une période cible, et le transfert et le stockage des informations d'index vidéo mises en mémoire tampon dans une zone de mémoire tampon du système de surveillance vidéo vers une zone de mémoire cible du système de surveillance vidéo comprennent :
dans le cas où le temps cible est postérieur au temps auquel les informations d'index vidéo ont été transférées et stockées pour la dernière fois dans la zone de stockage cible, le transfert et le stockage des informations d'index vidéo mises en mémoire tampon dans la zone tampon du système de vidéosurveillance vers la zone de stockage cible du système de vidéosurveillance.

10. Dispositif électronique selon la revendication 6, dans lequel, lorsque les informations d'identification du temps cible comprennent un temps cible, et avant de transférer et de stocker les informations d'index vidéo mises en mémoire tampon dans une zone tampon du système de surveillance vidéo vers une zone de stockage cible du système de surveillance vidéo, le procédé comprend en outre :
dans un cas où le temps cible n'est pas ultérieur au temps auquel les informations d'index vidéo ont été transférées et stockées pour la dernière fois dans la zone de stockage cible, la lecture du fichier vidéo à partir de l'heure cible sur la base du paquet d'informations d'index actuellement stocké dans la zone de stockage cible du système de surveillance vidéo ; et
le transfert et le stockage d'informations d'index vidéo mises en mémoire tampon dans une zone tampon du système de surveillance vidéo vers une zone de stockage cible du système de surveillance vidéo, comprend :
lorsqu'il est détecté qu'aucune information d'index vidéo n'est disponible dans la zone de stockage cible, le transfert et le stockage des informations d'index vidéo mises en mémoire tampon dans la zone tampon du système de vidéosurveillance vers la zone de stockage cible du système de vidéosurveillance.

11. Support de stockage lisible par ordinateur sur lequel est stocké un programme informatique, où le programme informatique est exécuté par un processeur pour exécuter le procédé selon l'une quelconque des revendications 1 à 5.
